# FASCICULE DE BREVET EUROPEEN

(11) **EP 2 571 277 B1**
(45) Date de publication et mention de la délivrance du brevet: **29.08.2018**
(21) Numéro de dépôt: 12183051.7
(22) Date de dépôt: 05.09.2012
(51) Int. Cl.: H04N 13/341, H04N 13/398

(54) **Procédé de communication et système associé de type lunettes pour un utilisateur utilisant un poste de visualisation**
Kommunikationsverfahren und entsprechendes Brillensystem für einen Benutzer, der eine Anzeigestation verwendet
Communication method and associated eyewear-like system for a user using a viewing station

(30) Priorité: 19.09.2011 FR 1158315
(43) Date de publication de la demande: 20.03.2013
(73) Titulaire: IDEMIA France, 92700 Colombes (FR)
(72) Inventeur: Bertin, Marc, 78720 LA CELLE LES BORDES (FR)
(74) Mandataire: Santarelli

(56) Documents cités:
- EP-A1- 2 369 402
- EP-A2- 2 365 699
- US-A1- 2007 214 474
- US-A1- 2010 110 368
- US-A1- 2011 025 821
- US-A1- 2011 074 918
- US-B1- 6 959 389
- US-B1- 7 586 514

## Description

La présente invention concerne un procédé de communication et un système associé de type lunettes pour un utilisateur utilisant un poste de visualisation. L'invention trouve une application particulière dans la communication entre des lunettes 3D et un écran d'affichage 3D correspondant.

Les détenteurs de lunettes utilisent celles-ci souvent pour regarder un poste de visualisation, tel qu'une télévision ou un écran de cinéma. Ces lunettes peuvent être des lunettes de correction pour corriger les défauts des yeux de l'utilisateur. Elles peuvent également être spécifiques au poste de visualisation utilisé, en offrant des fonctions supplémentaires. Tel est le cas des récentes lunettes 3D qui procurent un effet de relief 3D en collaboration avec un écran 3D associé.

Il existe aujourd'hui des lunettes 3D actives, par exemple selon la technologie XPanD 3D (non commercial), par lesquelles l'effet 3D est obtenu par des obturations rapides et successives de chaque oeil, synchronisées avec les images 3D affichées sur un téléviseur 3D ou écran de cinéma 3D. Cette synchronisation est assurée à l'aide d'un signal de synchronisation infrarouge envoyé par la source des images affichées aux lunettes, comme décrit par exemple dans la publication US 2010/194857. Le document US 2011/025821 décrit une autre solution de synchronisation avec un signal vidéo stéréoscopique.

On connaît également, de la publication US 6 959 389, des lunettes recevant un signal de synchronisation, sous forme de paramètre d'obturation, permettant d'obturer les lunettes actives de façon synchronisée avec un message affiché sur un dispositif informatique.

Le document US 2007/214474 décrit une télécommande capable d'envoyer, en réponse à la sélection de boutons par un utilisateur, un signal crypté à une set-top box, ainsi qu'une clé de décryptage. Le signal peut comprendre des informations de commande et de vérification de la set-top box.

Le document US 7 586 514 décrit un système de transfert d'images vidéo entre un avion et une station au sol, qui retourne à l'avion une image mise à jour. La station au sol reçoit un signal RF crypté, le décrypte avant de traiter les images vidéo.

De façon générale, l'utilisation de lunettes est étroitement liée à la nature visuelle des postes de visualisation. Il existe donc un intérêt à tirer profit de cette situation pour améliorer l'utilisation des postes de visualisation, tels qu'un téléviseur.

Dans ce dessein, l'invention concerne notamment un procédé de communication entre un utilisateur utilisant un dispositif de visualisation et ledit dispositif de visualisation comme défini par la revendication 1. Un tel procédé comprend notamment les étapes suivantes:
- acquérir, au niveau d'une interface d'acquisition intégrée dans une paire de lunettes de l'utilisateur, une information d'utilisation des lunettes;
- générer et transmettre au dispositif de visualisation, par un microcontrôleur intégré aux lunettes, un signal de données en fonction de l'information acquise.

L'invention permet de tirer profit des lunettes utilisées dans le cadre d'une action de visualisation, comme source de données propices au fonctionnement du dispositif de visualisation. Cela est rendu possible, selon l'invention, par l'acquisition d'une information au niveau d'une interface d'acquisition permettant d'évaluer un environnement extérieur d'utilisation et par la transmission d'un signal qui en découle audit dispositif de visualisation.

Les lunettes sont en effet un équipement parfaitement complémentaire d'un dispositif de visualisation, et à ce titre, utilisable de façon efficace pour apporter des données audit dispositif de visualisation.

Comme décrit par la suite, l'interface d'acquisition permet de détecter une information relative à un environnement externe, tel que le fait d'utiliser les lunettes détecté par un capteur approprié ou tel que l'identité de l'utilisateur aux fins de transmettre des données éventuellement personnalisées. La transmission peut être opérée par des techniques classiques de communication, et de façon avantageuse par voie sans fil de type radio (selon la norme Zigbee ou Bluetooth - noms commerciaux) ou infrarouge.

Les techniques actuelles de miniaturisation, par exemple au travers des modules sécurisés ou des cartes à puces, permet d'offrir des solutions pour intégrer des composants, tels qu'une interface d'acquisition, un microcontrôleur et/ou une interface de communication, au sein d'une structure de lunettes (par exemple dans les branches et/ou le cadre des lunettes).

Dans un mode de réalisation de l'invention, l'information d'utilisation des lunettes acquise est une information d'authentification de l'utilisateur. Divers modes de réalisation sont envisagés tels que décrits par la suite, allant de l'acquisition de données biométrique à la saisie d'un code confidentiel (par exemple un code PIN - pour *Personal Identification Number*). Cette configuration permet d'effectuer des opérations personnalisées et ainsi de transmettre, par les lunettes de l'utilisateur, des données également personnalisées au dispositif de visualisation.

En particulier, l'information d'authentification acquise est une information biométrique acquise à l'aide d'au moins un capteur intégré aux lunettes. Les lunettes, de par leur position sur l'utilisateur et/ou leur manipulation, constituent un moyen efficace d'acquérir des données biométriques de ce dernier sans solliciter l'utilisateur: détection d'une empreinte digitale lors de la manipulation des branches, détection d'un angle d'inclinaison de la tête propre à l'utilisateur ou de données biométriques représentatives de caractéristiques de la tête de l'utilisateur (iris, rétine, image du visage, dimension et forme de la tête déduites de la déformation des branches, etc.) pendant l'utilisation des lunettes.

Dans un mode de réalisation, le procédé comprend en outre l'authentification de l'utilisateur auprès du microcontrôleur intégré aux lunettes et à partir de l'information d'authentification acquise, avant de transmettre ledit signal de données au dispositif de visualisation uniquement en cas d'authentification réussie. Ainsi, la transmission de données (par exemple une seconde information stockée en mémoire) au dispositif de visualisation est conditionnée à l'authentification du porteur des lunettes.

Selon différents modes de réalisation, le signal de données généré et transmis est de nature variée. En particulier, le dispositif de visualisation prend avantageusement en compte les données du signal généré et transmis pour rendre un contenu sur un écran d'affichage.

Ainsi, selon un premier mode de réalisation, le signal de données généré et transmis comprend au moins une clé cryptographique de déchiffrage d'un contenu numérique à afficher sur le dispositif de visualisation.

Cette disposition permet à l'utilisateur d'utiliser ses lunettes pour stocker une clé de déchiffrage qui lui est généralement propre. Cette information est par exemple stockée en mémoire d'un module sécurisé.

Dans une configuration en variante, il peut être prévu que le procédé comprenne, au niveau du microcontrôleur des lunettes, les étapes suivantes:
- obtenir un contenu numérique crypté;
- obtenir une clé de décryptage à partir de l'information acquise;
- décrypter le contenu numérique crypté à l'aide de la clé de décryptage;
et procédé dans lequel le signal de données transmis au dispositif de visualisation comprend le contenu numérique ainsi décrypté.

Les lunettes sont ainsi prévues comme moyen de décryptage des données à visualiser, lesquelles peuvent être stockées en local dans une mémoire intégrée aux lunettes ou être reçues d'un équipement externe. En particulier, l'obtention du contenu numérique crypté peut comprendre la réception, par une interface de communication intégrée aux lunettes, d'un contenu numérique crypté transmis par le dispositif de visualisation.

Les lunettes peuvent ainsi constituer un moyen de décryptage personnel que l'utilisateur peut transporter et utiliser en tout endroit.

L'utilisation des lunettes pour un tel décryptage peut en outre être conditionnée à l'utilisation effective des lunettes par l'utilisateur. Dans ce contexte, le décryptage en continu du contenu numérique crypté à l'aide de la clé de décryptage et la transmission en continu du contenu décrypté au dispositif de visualisation sont conditionnés à une détection continue, par au moins un capteur intégré aux lunettes, du port des lunettes par ledit utilisateur. En d'autres termes, si le port des lunettes est interrompu, le décryptage et la transmission sont également interrompus. Cette disposition sécurise l'utilisation des lunettes lorsqu'elles comprennent une clé de décryptage, généralement personnelle.

La détection continue peut notamment comprend l'authentification continue (par analyse de l'iris, la rétine, l'image du visage, etc.) de l'utilisateur auquel la clé de décryptage utilisée est personnelle.

Selon un autre mode de réalisation, le signal de données généré et transmis comprend des données de configuration pour configurer (par exemple un rendu audio et/ou d'affichage) le dispositif de visualisation. Il peut s'agir de préférences personnelles (volume, chaînes ou langues préférées, paramètres par défaut, etc.). En effet, les lunettes étant des objets personnels, elles peuvent être utilisées avantageusement à des fins de personnalisation. En particulier, les données de configuration appartiennent à un profil propre à l'utilisateur et obtenu à l'aide de ladite information acquise (généralement une donnée d'identification, biométrique ou non).

Selon encore un autre mode de réalisation, le signal de données généré et transmis comprend des données à afficher par ledit dispositif de visualisation. A titre d'exemple, il peut s'agir de menus, par exemple personnalisés selon l'utilisateur ou propre aux fonctions liées à la présence de lunettes (agrandissement, fonction 3D pour des lunettes 3D).

Selon encore un autre mode de réalisation, le signal de données généré et transmis comprend un signal de commande du dispositif de visualisation. Dans cette configuration, les lunettes peuvent être utilisées comme télécommande dudit dispositif de visualisation, par exemple par détection des mouvements de la tête ou des yeux de l'utilisateur.

Selon une application particulière de l'invention, le dispositif de visualisation comprend un écran d'affichage 3D et les lunettes sont des lunettes 3D pour visualiser une image 3D sur ledit écran. Dans ce cas en effet, la présence des lunettes est généralement indispensable pour profiter pleinement des possibilités de l'écran d'affichage. Ainsi, il est avantageux de tirer profit de cette présence pour utiliser les lunettes comme source de données pour cet écran.

Corrélativement, l'invention concerne également des lunettes pour un utilisateur utilisant un dispositif de visualisation comme défini par la revendication 7. De telles lunettes intègrent :
- une interface d'acquisition configurée pour acquérir une information d'utilisation des lunettes;
- un microcontrôleur pour générer et commander la transmission, au dispositif de visualisation, d'un signal de données en fonction de l'information acquise.

Les lunettes présentent des avantages similaires à ceux du procédé de communication exposé ci-dessus.

De façon optionnelle, les lunettes peuvent comprendre des moyens se rapportant aux caractéristiques du procédé de communication exposé précédemment.

D'autres particularités et avantages de l'invention apparaîtront encore dans la description ci-après, illustrée par les dessins ci-joints, dans lesquels :
- la **figure 1** représente schématiquement des lunettes et un dispositif de visualisation selon l'invention;
- la **figure 2** illustre un exemple de capteur d'information biométrique pour une mise en oeuvre de l'invention; et
- la **figure 3** illustre un autre exemple de capteur d'utilisateur des lunettes selon l'invention.

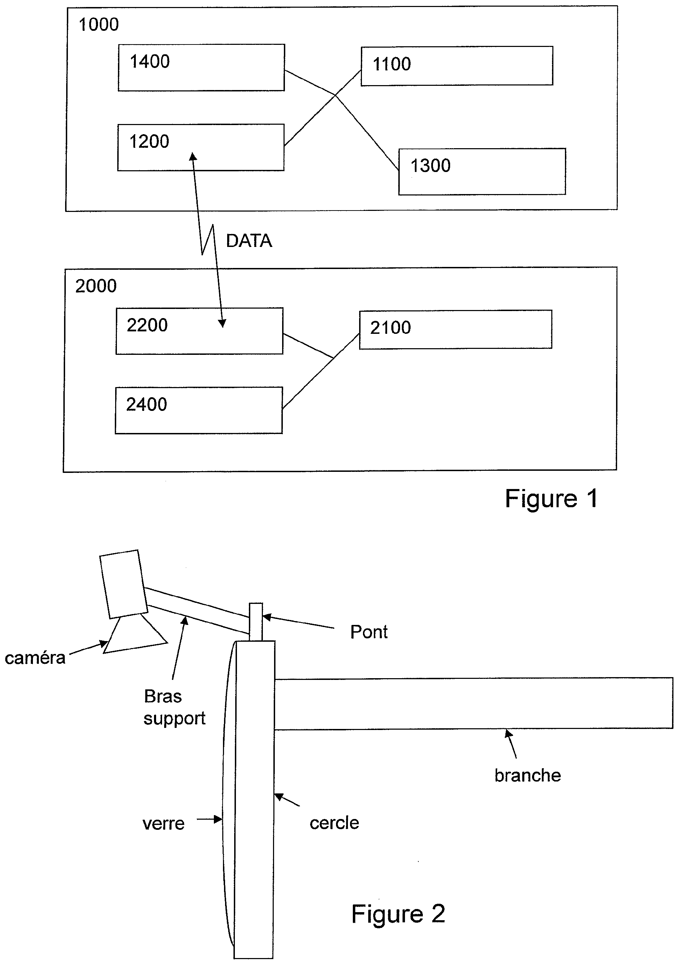

La **Figure 1** illustre schématiquement des lunettes 1000 d'un utilisateur et un dispositif de visualisation 2000, par exemple un téléviseur, un ordinateur ou encore une tablette numérique.

Les lunettes 1000 peuvent être des lunettes classiques de vue que l'utilisateur porte lorsqu'il regarde un contenu sur le dispositif de visualisation 2000. Lorsque ce dernier est conçu pour afficher des contenus en trois dimensions (3D), les lunettes 1000 peuvent être du type lunettes 3D bien connues de l'homme de l'art.

La figure montre des composants électroniques intégrés dans les lunettes 1000, par exemple selon les mêmes mécanismes d'intégrations que ceux mis en oeuvre pour la production de lunettes 3D dites actives. Ces composants électroniques sont notamment intégrés dans la monture des lunettes 1000, par exemple au niveau des branches, des cadres entourant les verres ou du pont reliant ces cadres. En variante, ils sont rapportés sur un circuit imprimé de faible dimension (par exemple une carte à puce) lié physiquement aux lunettes.

Dans un mode de réalisation, tout ou partie de ces composants est intégré dans un module sécurisé de microcircuit (ou carte à puce conforme à la norme ISO7816).

Les lunettes 1000 intègrent ainsi un microcontrôleur 1100, un module de communication 1200 avec le dispositif de visualisation 2000, une mémoire 1300, ainsi qu'une interface d'acquisition 1400 conçue pour acquérir une information d'utilisation des lunettes.

Le microcontrôleur 1100 est avantageusement sécurisé, c'est-à-dire conforme au critère commun ou au standard FIPS (pour *Federal Information Processing Standards*).

Le module de communication 1200 peut être de nature variée comme il ressortira des exemples d'application de l'invention ci-après. Par exemple, le module de communication 1200 est un émetteur-récepteur de type radiofréquence notamment selon l'un des protocoles Zigbee, Bluetooth, IEEE standard 802.15.1, ou de type infrarouge.

Le module de communication 1200 permet la transmission d'un signal de données généré au niveau des lunettes conformément à l'invention. Dans certaines applications, ce module 1200 permet aussi la réception de données depuis une source externe, incluant le dispositif de visualisation 2000, auquel cas une communication bidirectionnelle avec ce dispositif 2000 est mise en oeuvre.

Dans un mode de réalisation, ce module de communication 1200 met en oeuvre des communications sécurisées à l'aide de moyens cryptographiques, par exemple par signature ou cryptage/décryptage. Dans ce cas, des algorithmes de cryptage/décryptage et des clés correspondantes sont prévus au niveau des microcontrôleurs intégré aux lunettes et présent dans les équipements externes (notamment le dispositif de visualisation 2000).

La mémoire 1300 est une mémoire de stockage, type mémoire morte ou mémoire flash. Selon l'invention, elle comporte préférentiellement au moins une information à partir de laquelle le signal de données à transmettre au dispositif de visualisation 2000 est généré. Comme illustré dans les exemples ci-dessous, la nature de cette information peut être variée: clé cryptographique, contenu numérique, préférences système ou utilisateur, etc.

L'interface d'acquisition 1400 est une interface entrée-sortie préférentiellement constituée d'au moins un capteur permettant l'acquisition d'une information d'utilisation des lunettes. Il peut notamment s'agir d'une interface homme machine par laquelle l'utilisateur précise une donnée d'identification ou d'authentification (un code PIN saisi sur un clavier, une donnée biométrique acquise par des capteurs appropriés, par exemple). Divers exemples d'applications sont décrits par la suite.

Selon l'invention, une telle information acquise par l'interface 1400 est utilisée pour générer, par le microcontrôleur 1100, un signal de données DATA destiné au dispositif de visualisation 2000, téléviseur ou tablette numérique par exemple.

Dans un mode de réalisation particulier, l'interface 1400 peut en outre comprendre un bouton et/ou un clavier permettant à l'utilisateur de confirmer ou d'inhiber la transmission du signal de données DATA au dispositif 2000.

Le dispositif de visualisation 2000 comprend, outre un microcontrôleur 2100, un module de communication 2200 correspondant à celui 1200 des lunettes 1000, pour recevoir ce signal de données DATA. Ce module de communication 2200 permet ainsi de communiquer avec plusieurs lunettes de plusieurs utilisateurs, et éventuellement avec d'autres dispositifs externes.

Enfin, de par sa nature visuelle, le dispositif de visualisation 2000 comprend également un écran 2400 pour afficher un contenu numérique. Le contenu numérique ou son rendu peut en particulier être fonction du signal de données DATA reçu comme il ressortira plus en détail d'exemples ci-après.

Dans un premier exemple général de l'invention mettant en oeuvre une authentification de l'utilisateur des lunettes 1000, ce dernier saisit des données d'authentification AU (ou "*d'identification*") à l'aide de l'interface d'acquisition 1400. Ces données AU sont transmises au microcontrôleur 1100 qui les compare à des données d'authentification de référence AR mémorisées dans la mémoire 1300.

Cette comparaison est constitutive d'une opération d'authentification de l'utilisateur. Si les données AU et AR correspondent (authentification réussie), le microcontrôleur 1100 récupère des données DATA mémorisées dans la mémoire 1300 et la communique au dispositif de visualisation 2000 via le module de communication radio 1200.

A réception de ces données DATA, le dispositif de visualisation 2000 commande l'affichage et le rendu d'un contenu numérique sur l'écran 2400 en fonction de ces données DATA.

Pour l'acquisition des données d'authentification AU, l'interface d'acquisition 1400 peut être constituée de capteurs biométriques ou assimilés, ou d'une interface de saisie telle qu'un mini-clavier numérique ou alphanumérique, ou encore d'une interface de communication sans contact.

A l'aide d'un mini-clavier, l'utilisateur peut ainsi saisir un code PIN en guise de données d'authentification. L'authentification consiste alors à comparer ce code PIN avec un code PIN de référence préenregistré.

Pour ce qui est de l'interface de communication sans contact, typiquement selon la norme ISO/IEC 14443 ou selon le protocole NFC (pour *Near Field Communication*), équipant une carte à puce intégrée aux lunettes 1000, l'utilisateur des lunettes peut être porteur (dans une poche) d'un lecteur externe de carte à puce selon cette norme permettant la transmission d'une information d'authentification AU depuis le lecteur vers l'interface 1400 (cette information AU pouvant être stockée en mémoire du lecteur ou être saisie par l'utilisateur sur le lecteur externe). L'utilisateur s'authentifie ainsi sans contact.

Enfin, à l'aide d'un capteur biométrique, l'utilisateur peut saisir une information biométrique d'authentification telle que par exemple une empreinte digitale (ensemble de minuties représentant ladite empreinte digitale).

De préférence, le capteur biométrique peut être disposé de telle sorte qu'aucune action volontaire de l'utilisateur ne soit requise. Par exemple, le capteur d'empreinte digitale peut être pourvu sur les branches des lunettes de telle sorte qu'en manipulant ces dernières (en les ouvrant par exemple), une empreinte digitale de l'utilisateur est acquise.

Un autre exemple d'information biométrique peut être l'angle d'inclinaison des lunettes par rapport à l'horizontale. Cet angle est en effet caractéristique de l'utilisateur sans action spécifique de sa part. Le capteur approprié 1400 est dans ce cas un inclinomètre, par exemple sous la forme de MEMS (pour *Microelectromechanical systems*).

L'information biométrique peut en variante être représentative d'au moins une caractéristique de la tête de l'utilisateur. Cette information peut alors être acquise par le ou les capteurs 1400 lors du port des lunettes.

Dans un premier exemple, l'information biométrique est représentative de dimensions de la tête au niveau des lunettes. Des capteurs 1400 de type capteurs ou jauges de déformation ou de contrainte peuvent être prévus dans les branches des lunettes (un capteur par branche, ou une pluralité de capteurs répartis le long de chaque branche pour plus de précision dans l'évaluation de la déformation) de sorte à obtenir une valeur représentative de l'écartement des branches et donc de dimensions de la tête au niveau des lunettes portées.

Dans un autre exemple, l'information biométrique est une image du visage à comparer avec une image préenregistrée AR. Notamment cette image peut être une vue de haut du visage acquise par une caméra 1400 située par exemple sur le pont des lunettes 1000, comme illustré schématiquement sur la **Figure 2****.**

Dans une variante utilisant également une caméra 1400, située cette fois sur le côté des cercles, l'information biométrique peut être une image de l'iris de l'utilisateur acquise par cette caméra lorsque l'utilisateur tourne le regard en direction de celle-ci, par exemple sur l'instruction d'un message affiché sur l'écran 2400 du dispositif de visualisation 2000.

L'acquisition d'une information biométrique (par exemple l'iris, le visage, une dimension de la tête, etc.) de l'utilisateur sans un concours volontaire de ce dernier présente l'avantage de pouvoir mettre en oeuvre, au sein du microcontrôleur 1100, un contrôle continu ou "authentification continue" du porteur des lunettes. Cette authentification continue peut par exemple conditionner dans le temps la transmission de données qui varient également dans le temps: dès que l'authentification n'est plus obtenue (l'utilisateur retire par exemple les lunettes), la transmission en cours des données est interrompue, jusqu'à ce que l'utilisateur porte à nouveau les lunettes. Cette configuration accroît notablement la sécurité dans la transmission de données fortement personnalisées.

Comme évoqué précédemment, la nature même des données DATA selon l'invention peut varier sensiblement selon différentes applications.

Selon une configuration, ces données, initialement mémorisées dans la mémoire 1300, sont extraites de celles-ci en cas d'authentification positive, puis transmises au dispositif de visualisation 2000. Lorsque ces données sont personnalisées, l'invention permet à l'utilisateur de transporter avec lui ces données (par exemple des paramètres de configuration comme décrits ci-après) et d'utiliser n'importe quel dispositif de visualisation avec ces données personnelles.

Selon une application, ces données sont des éléments d'un menu interactif. Ainsi, lorsqu'un utilisateur porte des lunettes, celles-ci transmettent après authentification au dispositif 2000 ces éléments de menu interactif, lesquels peuvent donc être personnalisés selon l'utilisateur. Puis un menu interactif avec tout ou partie de ces éléments est affiché à l'utilisateur sur l'écran 2400, lequel utilisateur navigue dans le menu de façon classique à l'aide d'une télécommande du dispositif 2000.

De façon assez similaire, ces données peuvent être des données complémentaires à un programme en cours d'affichage sur l'écran 2400. A titre illustratif, ce peut être une traduction de la bande audio dans la langue de l'utilisateur des lunettes, ou bien des explications ou commentaires (sous forme audio ou texte) du programme affiché.

Selon une autre application, ces données transmises après authentification sont des informations de configuration ou de préférence, éventuellement personnelles à l'utilisateur, par exemple le volume sonore à appliquer par le dispositif 2000, une chaîne de démarrage à l'allumage du dispositif 2000, des paramètres de rendu tel que la luminosité ou le contraste ou le format de restitution (16/9, 4/3, image 2D ou 3D, etc.). En présence des lunettes et éventuellement d'une authentification réussie, le dispositif de visualisation 2000 fonctionnement alors selon ces informations de configuration.

Selon encore une autre application, ces données peuvent comprendre une information pour autoriser ou non la restitution et le rendu d'un contenu numérique par le dispositif 2000. Par exemple, il peut s'agir d'une clé cryptographique prévue pour décrypter un flux numérique crypté reçu par un tuner du dispositif 2000. Ainsi, en présence des lunettes et d'une authentification réussi, la clé cryptographique est transmise au dispositif 2000 lequel peut alors décrypter le flux numérique et afficher son contenu (en d'autres termes, cela permet notamment de décoder de façon sûre des chaînes cryptées). L'authentification préalable de l'utilisateur assure donc une utilisation sécurisée de la clé cryptographique pour décoder le flux numérique.

Selon encore une autre application, ces données initialement mémorisées dans la mémoire 1300 peuvent être un contenu numérique à afficher sur l'écran 2400, par exemple des photos ou une séquence vidéo. De préférence, dans ce cas, on utilisera une carte à mémoire, par exemple de type microSD (pour *Secure Digital*). Ainsi, le dispositif 2000 reçoit, directement des lunettes, un contenu numérique à afficher.

Selon encore une autre application, les lunettes peuvent être utilisées comme une télécommande du dispositif de visualisation 2000. Dans ce cas, les données initialement mémorisées dans la mémoire 1300 sont des signaux de commande compatibles avec le dispositif 2000.

A titre illustratif, le capteur 1400 peut être de type capteur de mouvement (accéléromètre ou inclinomètre notamment) permettant de détecter un mouvement ou une position de la tête de l'utilisateur. A détection d'un tel mouvement, un signal de commande associé est transmis au dispositif 2000 pour par exemple modifier son affichage.

Par exemple, si le capteur 1400 détecte que l'utilisateur est allongé, l'image affichée par 2400 peut être tournée de 90°.

Selon un autre exemple, si le capteur 1400 détecte un mouvement "non" de la tête, un signal commandant l'extinction du dispositif 2000 peut être envoyé.

A noter que si plusieurs utilisateurs d'un même dispositif 2000 portent chacun des lunettes selon l'invention, à réception d'un tel signal de commande le dispositif 2000 peut afficher un message demandant aux autres utilisateurs de valider ou non ce signal. Chaque utilisateur peut alors voter en effectuant soit le mouvement de la tête similaire (ce qui envoie le même signal de commande) soit un mouvement de la tête contraire. Une règle de vote (unanimité ou majorité) permet au dispositif 2000 de déterminer, au final, si le signal de commande reçu doit être exécuté ou non.

Selon encore une autre application, ces données initialement mémorisées dans la mémoire 1300 peuvent comprendre une information de synchronisation (par exemple une fréquence) propre à l'utilisateur. Par exemple, il peut s'agir d'une vitesse d'obturation de chaque oeil pour des lunettes 3D actives, qui soit adaptée aux yeux de l'utilisateur. Dans ce cas, l'information de synchronisation est transmise au dispositif de visualisation 3D 2000, lequel adapte, à réception de celle-ci, la vitesse d'affichage des images et donc de synchronisation des obturations en fonction de cette information de synchronisation.

Selon une autre configuration, les données DATA transmises ne sont pas initialement mémorisées dans la mémoire 1300. Elles sont le résultat d'un traitement du microcontrôleur, par exemple à partir d'une information stockée dans la mémoire 1300. Encore une fois, ce traitement générant les données DATA ou bien la transmission de celles-ci au dispositif 2000 peut être conditionnée à l'authentification de l'utilisateur comme décrite précédemment.

Selon une application, les lunettes 1000 mémorisent une clé cryptographique en 1300 et le microcontrôleur 1100 l'utilise, en cas d'authentification réussie de l'utilisateur, pour décrypter (selon des mécanismes classiques) un contenu numérique crypté reçu d'une source externe (par exemple du dispositif de visualisation 2000 en utilisant la communication bidirectionnelle 1200-2200). Un contenu numérique décrypté DATA est ainsi obtenu, lequel est alors transmis au dispositif de visualisation 2000.

Le contenu numérique peut être un contenu multimédia tel que un jeu, un film, ou encore un accès à un service domotique.

Dans les exemples qui précèdent, les données DATA transmises sont directement utilisées par le dispositif de visualisation 2000 pour afficher un contenu numérique: les données DATA forment soit directement tout ou partie du contenu numérique à afficher, soit des données (clé cryptographique) autorisant la rendu d'un tel contenu, soit encore des informations de configuration influant par exemple sur le rendu ou sur des paramètres d'affichage du dispositif 2000.

Selon une variante cependant, le dispositif 2000 peut jouer le simple rôle de routeur des données DATA vers un autre équipement, par exemple les lunettes d'un autre utilisateur, un téléphone mobile ou un décodeur (récepteur TNT par exemple). Dans cette configuration, cet autre équipement intègre une fonction non présente dans le dispositif 2000 et nécessaire pour le traitement des données DATA avant par exemple affichage sur ce dispositif 2000. Ainsi, ces données sont routées vers cet équipement, qui les traite et peut les renvoyer vers le dispositif de visualisation pour affichage.

Par exemple, les lunettes 1000 de l'utilisateur comprennent une interface de réception de données (interface radio), par exemple pour recevoir des appels téléphoniques ou un signal TNT.

Lorsque l'autre équipement est de type téléphone mobile, les informations de signal d'appel ou même la conversation téléphonique elle-même sont transmises depuis les lunettes 1000 vers le téléphone mobile via le dispositif 2000, ce dernier opérant une restitution de l'appel: affichage sur l'écran des informations de la communication en cours (numéro appelant, durée, signal d'appel, etc.) et restitution audio de la conversation téléphonique.

Lorsque l'autre équipement est un décodeur TNT, un signal codé TNT reçu par les lunettes est transmis au décodeur TNT via le dispositif 2000 pour décodage. Le flux TNT décodé est retourné par le décodeur au dispositif 2000 pour affichage sur l'écran 2400.

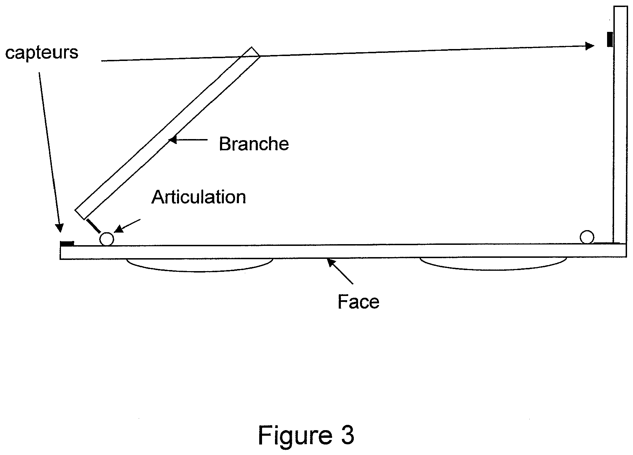

Dans une variante du premier exemple général de l'invention, aucune donnée d'authentification n'est acquise, mais simplement une information d'utilisation des lunettes. En référence à la **Figure 3****,** l'interface d'acquisition 1400 comporte un capteur configuré pour détecter l'ouverture et la fermeture des branches de lunettes. A titre d'exemple, il peut s'agir d'un capteur de la position des articulations entre les branches et les cercles des lunettes, ou un détecteur de présence de la tête à proximité proche des lunettes.

Dans l'exemple de la figure, il s'agit de simples boutons mécaniques ou capacitifs permettant de savoir si les lunettes sont en cours d'utilisation (branches ouvertes) ou non (branches fermées).

En fonction de cette information d'utilisation des lunettes acquise par le capteur 1400, les lunettes envoient un signal de commande DATA soit d'allumage du dispositif 2000 (en cas de lunettes ouvertes) soit d'extinction ou de mise en veille de ce dispositif (en cas de lunettes fermées ou d'absence d'une tête à proximité des lunettes, c'est-à-dire lorsque l'utilisateur ne porte pas les lunettes).

Dans ces différents exemples des Figures 1 à 3, le dispositif de visualisation 2000 est un équipement physiquement distinct des lunettes 1000 de l'invention. Il peut notamment s'agir d'un téléviseur, d'un ordinateur ou encore d'une tablette numérique.

Les explications et mécanismes décrits ci-dessus peuvent également s'appliquer à une configuration où le dispositif de visualisation 2000 fait partie intégrante des lunettes 1000. Et notamment, ces deux entités peuvent disposer des interfaces de communication 1200 et 2200 décrites précédemment pour communiquer entre elles, par voie sans fil ou éventuellement par liaison filaire.

Le projet « Project Glass » de Google (noms commerciaux) fournit par exemple une solution technique de dispositif de visualisation monté sur des lunettes.

Les exemples qui précèdent ne sont que des modes de réalisation de l'invention qui ne s'y limite pas.

## Revendications

1. Procédé de communication entre un utilisateur utilisant un dispositif de visualisation (2000) comprenant un écran d'affichage 3D (2400) et ledit dispositif de visualisation, comprenant les étapes suivantes:
- acquérir, au niveau d'une interface d'acquisition (1400) intégrée dans une paire de lunettes (1000) de l'utilisateur, une information d'utilisation des lunettes, la paire de lunettes étant des lunettes 3D, distinctes du dispositif de visualisation, pour visualiser une image 3D sur ledit écran d'affichage 3D;
- générer et transmettre au dispositif de visualisation (2000), par un microcontrôleur (1100) intégré aux lunettes 3D, un signal de données (DATA) en fonction de l'information acquise,
**caractérisé en ce que** le procédé comprend en outre les étapes consistant, au niveau du microcontrôleur (1100) intégré aux lunettes 3D, à obtenir un contenu numérique vidéo crypté, à obtenir une clé de décryptage à partir de l'information acquise, et à décrypter le contenu numérique vidéo crypté à l'aide de la clé de décryptage,
et **en ce que** ledit signal de données (DATA) transmis au dispositif de visualisation (2000) comprend le contenu numérique video décrypté pour visualisation sur ledit écran d'affichage 3D.

2. Procédé selon la revendication 1, dans lequel l'information d'utilisation des lunettes 3D acquise est une information d'authentification de l'utilisateur.

3. Procédé selon la revendication 2, dans lequel l'information d'authentification acquise est une information biométrique acquise à l'aide d'au moins un capteur intégré aux lunettes 3D.

4. Procédé selon la revendication 2 ou 3, comprenant en outre l'authentification de l'utilisateur auprès du microcontrôleur (1100) intégré aux lunettes et à partir de l'information d'authentification acquise, avant de transmettre ledit signal de données (DATA) au dispositif de visualisation (2000) uniquement en cas d'authentification réussie.

5. Procédé selon la revendication 1, dans lequel l'obtention du contenu numérique vidéo crypté comprend la réception, par une interface de communication (1200) intégrée aux lunettes 3D. d'un contenu numérique vidéo crypté transmis par le dispositif de visualisation (2000).

6. Procédé selon la revendication 5, dans lequel le décryptage en continu du contenu numérique vidéo crypté à l'aide de la clé de décryptage et la transmission en continu du contenu vidéo décrypté au dispositif de visualisation (2000) sont conditionnés à une détection continue, par au moins un capteur (1400) intégré aux lunettes (1000), du port des lunettes 3D par ledit utilisateur.

7. Lunettes 3D (1000) de visualisation, par un utilisateur, d'une image 3D sur un écran d'affichage 3D (2400) équipant un dispositif de visualisation (2000) distinct des lunettes 3D, les lunettes 3D intégrant:
- une interface d'acquisition (1400) configurée pour acquérir une information d'utilisation des lunettes 3D;
- un microcontrôleur (1100) pour générer et commander la transmission, au dispositif de visualisation (2000), d'un signal de données (DATA) en fonction de l'information acquise,
**caractérisé en ce que** le microcontrôleur est en outre configuré pour obtenir un contenu numérique vidéo crypté, obtenir une clé de décryptage à partir de l'information acquise, et décrypter le contenu numérique vidéo crypté à l'aide de la clé de décryptage,
et **en ce que** le signal de données (DATA) transmis au dispositif de visualisation (2000) comprend le contenu numérique vidéo décrypté pour visualisation sur ledit écran d'affichage 3D.

8. Lunettes 3D selon la revendication 7, dans lesquelles l'information d'utilisation des lunettes 3D acquise est une information d'authentification de l'utilisateur.

9. Lunettes 3D selon la revendication 8, dans lesquelles l'information d'authentification acquise est une information biométrique acquise à l'aide d'au moins un capteur intégré aux lunettes 3D.

10. Lunettes 3D selon la revendication 8 ou 9, dans lesquelles le microcontrôleur est en outre configuré pour authentifier l'utilisateur à partir de l'information d'authentification acquise, avant de transmettre ledit signal de données (DATA) au dispositif de visualisation (2000) uniquement en cas d'authentification réussie.

11. Lunettes 3D selon la revendication 7, comprenant une interface de communication (1200) pour recevoir le contenu numérique vidéo crypté transmis par le dispositif de visualisation (2000).

12. Lunettes 3D selon la revendication 11, dans lesquelles le microcontrôleur est configuré pour décrypter en continu le contenu numérique vidéo crypté à l'aide de la clé de décryptage et transmettre en continu le contenu vidéo décrypté au dispositif de visualisation (2000), de façon conditionnée à une détection continue, par au moins un capteur (1400) intégré aux lunettes 3D (1000), du port des lunettes 3D par ledit utilisateur.

## Patentansprüche

1. Kommunikationsverfahren zwischen einem Benutzer, der eine Anzeigevorrichtung (2000) umfassend einen 3D-Anzeigebildschirm (2400) verwendet, und der Anzeigevorrichtung, umfassend die folgenden Schritte:
- im Bereich einer Datafeed-Schnittstelle (1400), die in ein Brillenpaar (1000) des Benutzers integriert ist, Eingabe einer Information zur Verwendung der Brillen, wobei das Brillenpaar 3D-Brillen sind, die von der Anzeigevorrichtung getrennt sind, um ein 3D-Bild auf dem 3D-Anzeigebildschirm anzuzeigen;
- Erzeugung und Übertragung an die Anzeigevorrichtung (2000) eines Datensignals (DATA) in Abhängigkeit von der eingegebenen Information durch einen in die 3D-Brillen integrierten Mikrokontroller (1100),
**dadurch gekennzeichnet, dass** das Verfahren ferner die Schritte umfasst, die im Bereich des Mikrokontrollers (1100), der in die 3D-Brillen integriert ist, darin bestehen, einen verschlüsselten digitalen Videoinhalt zu erhalten, einen Schlüssel zur Entschlüsselung aus der eingegebenen Information zu erhalten und den verschlüsselten digitalen Videoinhalt mit Hilfe des Schlüssels zur Entschlüsselung zu entschlüsseln,
und dass das Datensignal (DATA), das an die Anzeigevorrichtung (2000) übertragen wird, den entschlüsselten digitalen Videoinhalt für die Anzeige auf dem 3D-Anzeigebildschirm umfasst.

2. Verfahren nach Anspruch 1, bei dem die eingegebene Information zur Verwendung der 3D-Brillen eine Information zur Authentifizierung des Benutzers ist.

3. Verfahren nach Anspruch 2, bei dem die eingegebene Authentifizierungsinformation eine biometrische Information ist, die mit Hilfe mindestens eines in die 3D-Brillen integrierten Sensors eingegeben wird.

4. Verfahren nach Anspruch 2 oder 3, ferner umfassend die Authentifizierung des Benutzers bei dem Mikrokontroller (1100), der in die Brillen integriert ist, und auf Basis der eingegebenen Authentifizierungsinformation, bevor das Datensignal (DATA) an die Anzeigevorrichtung (2000) nur im Falle einer erfolgreichen Authentifizierung übertragen wird.

5. Verfahren nach Anspruch 1, bei dem der Erhalt des verschlüsselten digitalen Videoinhalts den Empfang eines von der Anzeigevorrichtung (2000) übertragenen verschlüsselten digitalen Videoinhalts durch eine in die 3D-Brillen integrierte Kommunikationsschnittstelle (1200) umfasst.

6. Verfahren nach Anspruch 5, bei dem die kontinuierliche Entschlüsselung des verschlüsselten digitalen Videoinhalts mit Hilfe des Schlüssels zur Entschlüsselung und die kontinuierliche Übertragung des entschlüsselten Videoinhalts an die Anzeigevorrichtung (2000) einer kontinuierlichen Erfassung des Tragens der 3D-Brillen durch den Benutzer durch mindestens einen in die Brillen (1000) integrierten Sensor (1400) unterworfen sind.

7. 3D-Brillen (1000) zur Anzeige eines 3D-Bildes auf einem 3D-Anzeigebildschirm (2400), mit dem eine von den 3D-Brillen getrennte Anzeigevorrichtung (2000) ausgestattet ist, durch einen Benutzer, wobei die 3D-Brillen umfassen:
- eine Datafeed-Schnittstelle (1400), die eingerichtet ist, um eine Information zur Verwendung der 3D-Brillen einzugeben;
- einen Mikrokontroller (1100), um die Übertragung eines Datensignals (DATA) an die Anzeigevorrichtung (2000) in Abhängigkeit von der eingegebenen Information zu erzeugen und zu steuern,
**dadurch gekennzeichnet, dass** der Mikrokontroller ferner eingerichtet ist, um einen verschlüsselten digitalen Videoinhalt zu erhalten, einen Schlüssel zur Entschlüsselung auf Basis der eingegebenen Information zu erhalten und den verschlüsselten digitalen Videoinhalt mit Hilfe des Schlüssels zu Entschlüsselung zu entschlüsseln,
und dass das an die Anzeigevorrichtung (2000) übertragene Datensignal (DATA) den entschlüsselten digitalen Videoinhalt für Anzeige auf dem 3D-Anzeigebildschirm umfasst.

8. 3D-Brillen nach Anspruch 7, bei denen die Information zur Verwendung der 3D-Brillen eine Information zur Authentifizierung des Benutzers ist.

9. 3D-Brillen nach Anspruch 8, bei denen die eingegebene Authentifizierungsinformation eine biometrische Information ist, die mit Hilfe mindestens eines in die 3D-Brillen integrierten Sensors eingegeben wird.

10. 3D-Brillen nach Anspruch 8 oder 9, bei denen der Mikrokontroller ferner eingerichtet ist, um den Benutzer auf Basis der eingegebenen Authentifizierungsinformation zu authentifizieren, bevor das Datensignal (DATA) an die Anzeigevorrichtung (2000) nur im Falle einer erfolgreichen Authentifizierung übertragen wird.

11. 3D-Brillen nach Anspruch 7, umfassend eine Kommunikationsschnittstelle (1200), um den von der Anzeigevorrichtung (2000) übertragenen verschlüsselten digitalen Videoinhalt zu empfangen.

12. 3D-Brillen nach Anspruch 11, bei denen der Mikrokontroller eingerichtet ist, um kontinuierlich den verschlüsselten digitalen Videoinhalt mit Hilfe des Schlüssels zur Entschlüsselung zu entschlüsseln und kontinuierlich den entschlüsselten Videoinhalt an die Anzeigevorrichtung (2000) zu übertragen, bedingt durch eine kontinuierliche Erfassung des Tragens der 3D-Brillen durch den Benutzer durch mindestens einen in die 3D-Brillen (1000) integrierten Sensor (1400).

## Claims

1. Method for communication between a user using a viewing device (2000) comprising a 3D display screen (2400) and said viewing device, comprising the following steps:
- acquiring, at an acquisition interface (1400) integrated into a pair of glasses (1000) of the user, information on the use of the glasses, the pair of glasses being 3D glasses, separate from the viewing device, for viewing a 3D image on said 3D display screen;
- generating and transmitting, to the viewing device (2000), by way of a microcontroller (1100) integrated into the 3D glasses, a data signal (DATA) depending on the acquired information,
**characterized in that** the method furthermore comprises the steps, in the microcontroller (1100) integrated into the 3D glasses, of obtaining encrypted digital video content, of obtaining a decryption key from the acquired information, and of decrypting the encrypted digital video content using the decryption key,
and **in that** said data signal (DATA) transmitted to the viewing device (2000) comprises the decrypted digital video content for viewing on said 3D display screen.

2. Method according to Claim 1, wherein the acquired information on the use of the 3D glasses is information for authenticating the user.

3. Method according to Claim 2, wherein the acquired authentication information is biometric information acquired using at least one sensor integrated into the 3D glasses.

4. Method according to Claim 2 or 3, furthermore comprising authentication of the user with the microcontroller (1100) integrated into the glasses and on the basis of the acquired authentication information, before transmitting said data signal (DATA) to the viewing device (2000) only if authentication is successful.

5. Method according to Claim 1, wherein obtaining the encrypted digital video content comprises receiving, by way of a communication interface (1200) integrated into the 3D glasses, encrypted digital video content transmitted by the viewing device (2000).

6. Method according to Claim 5, wherein the continuous decryption of the encrypted digital video content using the decryption key and the continuous transmission of the decrypted video content to the viewing device (2000) are conditional upon continuous detection, by at least one sensor (1400) integrated into the glasses (1000), of the 3D glasses being worn by said user.

7. 3D glasses (1000) for viewing, by a user, of a 3D image on a 3D display screen (2400) fitted to a viewing device (2000) separate from the 3D glasses, the 3D glasses incorporating:
- an acquisition interface (1400) configured to acquire information on the use of the 3D glasses;
- a microcontroller (1100) for generating and controlling the transmission, to the viewing device (2000), of a data signal (DATA) depending on the acquired information,
**characterized in that** the microcontroller is furthermore configured to obtain encrypted digital video content, obtain a decryption key from the acquired information, and decrypt the encrypted digital video content using the decryption key,
and **in that** the data signal (DATA) transmitted to the viewing device (2000) comprises the decrypted digital video content for viewing on said 3D display screen.

8. 3D glasses according to Claim 7, wherein the acquired information on the use of the 3D glasses is information for authenticating the user.

9. 3D glasses according to Claim 8, wherein the acquired authentication information is biometric information acquired using at least one sensor integrated into the 3D glasses.

10. 3D glasses according to Claim 8 or 9, wherein the microcontroller is furthermore configured to authenticate the user on the basis of the acquired authentication information, before transmitting said data signal (DATA) to the viewing device (2000) only if authentication is successful.

11. 3D glasses according to Claim 7, comprising a communication interface (1200) for receiving the encrypted digital video content transmitted by the viewing device (2000) .

12. 3D glasses according to Claim 11, wherein the microcontroller is configured to continuously decrypt the encrypted digital video content using the decryption key and continuously transmit the decrypted video content to the viewing device (2000) in a manner conditional upon continuous detection, by at least one sensor (1400) integrated into the 3D glasses (1000), of the 3D glasses being worn by said user.
